# EUROPEAN PATENT SPECIFICATION

(11) **EP 3 305 653 B1**
(45) Date of publication and mention of the grant of the patent: **01.04.2020**
(21) Application number: 17194817.7
(22) Date of filing: 04.10.2017
(51) Int. Cl.: B64C 1/08, B64C 1/26, B64C 13/06, B64C 13/14, B64D 45/00

(54) **AIRFRAME FOR CERTIFIED ULTRALIGHT AND / OR LIGHT AIRCRAFT**
FLUGZEUGZELLE FÜR FLUGZEUGE, ZUGELASSEN IN DEN KATEGORIEN DER ULTRALEICHT- UND LEICHTFLUGZEUGE
CELLULE D'AVION POUR AÉRONEFS CERTIFIÉS DANS LES CATÉGORIES D'AVIONS ULTRA-LÉGERS ET/OU LÉGERS

(30) Priority: 04.10.2016 IT 201600099415
(43) Date of publication of application: 11.04.2018
(73) Proprietor: C.A.I. Confident Aircraft Industry S.R.L., 80018 Mugnano di Napoli (IT)
(72) Inventor: LICCARDO, Giuseppe, 80018 Mugnano di Napoli (IT); LICCARDO, Domenico, 80018 Mugnano di Napoli (IT); LICCARDO, Rosario, 80018 Mugnano di Napoli (IT)
(74) Representative: De Tullio, Michele Elio

(56) References cited:
- GB-A- 2 387 912
- US-A- 1 922 371
- US-A- 3 129 605
- US-A- 3 439 890
- US-A- 4 624 425
- US-A1- 2002 179 772
- US-B1- 9 415 871
- "KITS ULM ET AVIONS AVID FLYER - EURO FLY AERO - AVID +", INTERNET CITATION, 6 July 2004 (2004-07-06), XP002287325, Retrieved from the Internet: URL:http://www.euroflyaero.com/mini-explor er [retrieved on 2004-07-06]

## Description

The present invention relates to aircraft development.

More particularly, the present invention relates to design and manufacture of airframes for both aircrafts falling in Very Light Aircraft (CS-VLA) and Normal Utility (CS-23) classes of the Italian Civil Aviation Authority, ENAC, and for certified powered ultralight aircrafts (ULM) whose authorized weight limits are lower than those for *General Aviation (AG),* as defined by law No. 106 of 25 March 1985 and later amendments, with flight regulations being governed by law No. 133 of 9 July 2010, which also includes advanced ultralight aircrafts.

Namely, in Italy ultralight aircrafts are intended to have the following characteristics:
- single-seater with engine, max. weight 300 kg and stalling speed not exceeding 65 km/h;
- two-seater with engine, max. weight 450 kg and stalling speed not exceeding 65 km/h;
- advanced two-seater, max weight 600 kg.

Current motorized ultralight aircrafts are generally classified into:
- motor gliders;
- ultralight trikes (powered hang gliders with 2-axis control by weight-shift);
- paramotor (powered paraglider with harness);
- 3-axis aircrafts (with controls directed in three axes in space: roll, pitch and yaw);
- autogyros;
- helicopters;
- advanced ultralight aircrafts: these have a more advanced design than those listed above, and are similar to general aviation aircrafts, in terms of construction and aerodynamics, excepting their regulatory limits concerning weight and stalling speed.

Certain studies are currently aimed at the design of novel solutions based on methods and techniques for reducing the weight and improving the flight performance and safety of ultralight aircrafts.

The term airframe is generally intended to designate the following parts of an aircraft: fuselage, wing and vertical and horizontal stabilizers.

The aircraft fuselage has a number of functions, including the function of holding the cockpit or flight deck, part of the payload and most of aircraft equipment.

It is also designed to act as the structural element that connects the wings with the stabilizing members (tailplanes or stabilizers).

In terms of construction, fuselages of light and ultralight aircrafts generally have a truss structure.

The fuselage truss structure is composed of a number of longitudinal, vertical and transverse members, known as "bars", intersecting at points known as "nodes", which are required to absorb the stresses caused by aerodynamic loads acting on the skin surfaces.

Namely, during the flight, stresses are absorbed by four main beams, having common rods.

The two beams that react to vertical stresses form the sides, the other two, that react to horizontal stresses, form the bottom and ceiling of the structure.

The structure may be formed with square or round struts (or tubes), made of steel or light aluminum alloys, and connected together by appropriate couplings or by welding, if they are made of steel. This will provide a fuselage having a polygonal cross-sectional frame.

Truss structures have the advantage of allowing the application of concentrated loads at the nodes, but are totally incompatible with loads caused by cockpit pressurization, which makes them only suitable for use in small (light an ultralight) planes, which do not reach high altitudes.

Further advantages of these structures are:
- lighter weight;
- simpler construction.

Further disadvantages are:
- inability to absorb large aerodynamic loads;
- incompatibility with deep penetration strike designs, unless appropriate fairings are used.

Patent document US2002/0179772 A1, "Light aircraft fuselage and structural frame connectors" discloses a fuselage for an ultralight aircraft having a truss structure composed of steel tubular members, connected together by structural connectors or connector blocks.

The blocks include boreholes receiving the ends of the lateral tubular members, and longitudinal tubes or longerons that fit into holes extending between opposed faces of the blocks.

Besides connecting the tubular members, the connector blocks also serve as jigs for assembling the structural frame.

The tubes may be plug welded to the blocks, and the fuselage outer skin may be attached to the structural connectors to form a dual fuselage structure.

Document WO9729013, "Ultralight aircraft and method for manufacturing it" discloses an ultralight aircraft comprising a monolithic outer shell that forms the fuselage of the aircraft and a monolithic inner shell that forms the interior of the fuselage; the inner shell is mounted to the outer shell to form a single monolithic structure; the monolithic wings and tail planes are mounted to the outer shell.

Document CN204415706 "Tube type frame for ultra-light helicopter" discloses a tubular frame structure for an ultralight helicopter affording lightweight, high stability and space-saving properties.

The frame structure comprises bottom supports, middle supports and top supports, from bottom to top; lower tubular supporting beams are arranged between the bottom supports and the middle supports; middle tubular supporting beams are arranged between the middle supports and the top supports; top tubular supporting beams are arranged on the top supports and are used for supporting support plates.

Successful tests are currently being conducted on hybrid powered ultralight aircraft prototypes, whose traditional four-stroke gasoline engine is combined with a battery-powered electric engine.

These ultralight aircrafts use the petrol engine for the more demanding take-off operations and the electric engine, once the cruising speed has been reached, for the main flight operations, combining all the tasks that are conventionally assigned to the fossil fuel-powered engine, which is more harmful for the environment.

Hybrid technologies have become increasingly successful in the automotive industry, but have not gained much success in aeronautics, especially due to batteries, which still have a heavy weight and a poor capacity.

Some research and innovation progress led to test the use of lithium polymer batteries - like those that are used in PCs - which are lighter and more efficient than conventional batteries, in such aircrafts.

Nevertheless, the aforementioned documents prove that unsolved technical problems still exist, and improvements may still be envisaged in an attempt to design a novel airframe for ultralight aircrafts that might meet current market requirements:
- an increasingly safe means that might increase the chance of survival in the event of structural technical failures and engine failures,
- novel solutions to improve existing ultralight aircrafts.

The object of the present invention is to provide an airframe having an optimized structure for either general aviation or ultralight aircrafts, which also accomodates batteries for hybrid electric-thermal propulsion. Such an airframe has the characteristics as identified in appended claim 1. The present disclosure is also directed towards an airframe having :
- a structure entirely made of metal;
- monitoring sensors both in the fuselage and the wingtips;
- truss structure of the fuselage, with intercommunicating tubes made of chrome molybdenum steel, pressurized with inert gas;
- critical couplings in the front of the fuselage;
- fuselage appendages with large connections;
- wide space in the fuselage to accommodate an auxiliary tank;
- cockpit with enlarged main fuselage section;
- appropriate handwheels for controlling the rudder pedals as required by the pilot;
- a wing entirely made of light metal alloy and connected to the fuselage by steel couplings;
- tail cone made of a light alloy supporting the tail units.

A further object of the present invention is to provide a certified ultralight or light aircraft that is designed to cover both ranges of ultralight and general aviation aircrafts. The airframe affords the following advantages:
- savings: reduced times and costs for assembly and maintenance, due to the use of a single metal material,
- safety:
   o improved construction of the main body, imparting greater strength and protection for the aircraft crew,
   o pressure loss warning to prevent the risk of failure,
   o the most critical couplings of the aircraft located in the front of the fuselage,
   o three-point connection of the wing (instead of two-point connection, as is known in the art),
   o reduced interference affecting the overall aerodynamics of the aircraft,
- wider interior spaces, affording the installation of an auxiliary tank,
- improved ergonometrics and comfort:
   o a cockpit with a larger main fuselage section than in any other aircraft of the same class;
   o rudder pedals with adjustable positions to maintain the centering conditions of the aircraft unchanged.

In view of the aforementioned objects and advantages, the invention provides an airframe for an aircraft which comprises a fuselage having a metal truss structure and wings having a metal structure with ribs and spars.

The interior space of the flight deck is defined by a central compartment for housing two seats in side-by-side relationship, which cannot be displaced along the axis of travel of the aircraft, a rear service compartment having a fixed size and located behind such seats, and a front compartment for housing rudder pedals that can be adjusted according to the size of the pilot.

Further features and advantages of the invention will be more apparent from the detailed description of a preferred, non-exclusive embodiment of an airframe for certified hybrid electric-thermal propulsion aircrafts, having remarkable stability, lightweight, capacity and comfort properties, as shown by way of non-limiting example with the help of the accompanying drawings, in which:

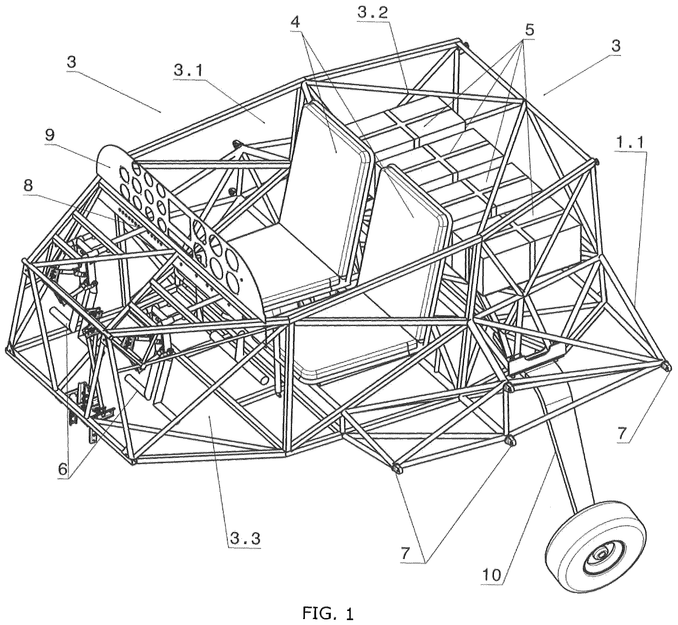

Figure 1 is an axonometric view of the cockpit structure of the airframe, having two pilot's seats in side-by-side relationship, and a rear service compartment for accommodating four auxiliary batteries;

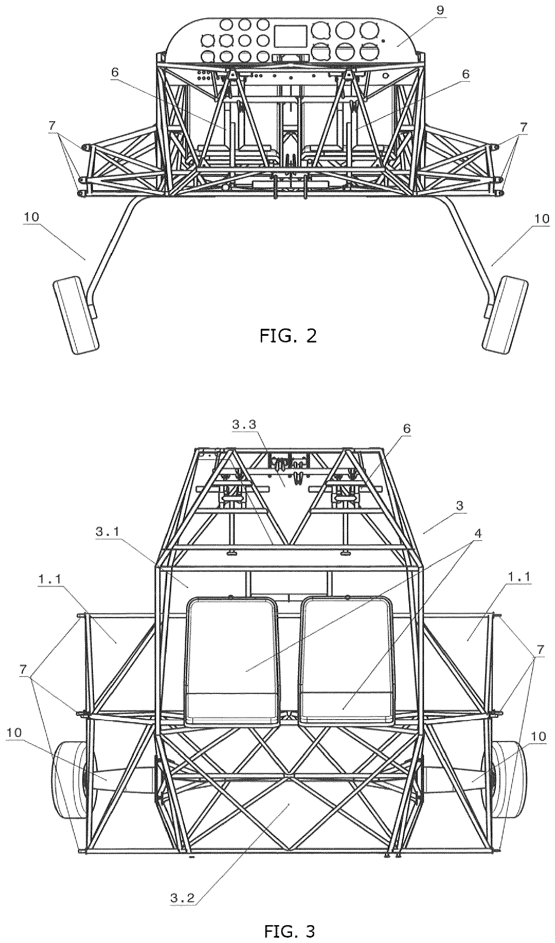

Figure 2 shows a front view of the cockpit structure of Figure 1;
Figure 3 shows a top view of the cockpit structure of Figures 1 and 2, in which the service compartment is empty;

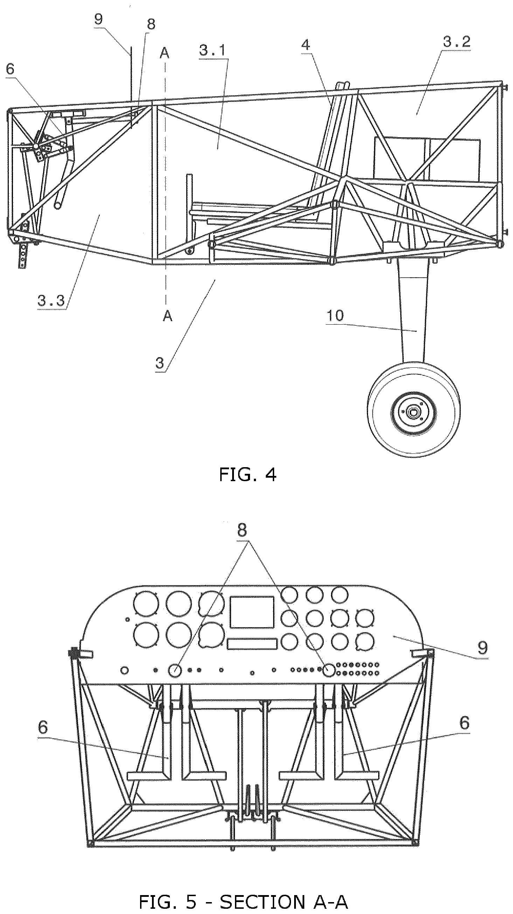

Figure 4 shows a side view of the cockpit structure of Figure 3;
Figure 5 shows a detail of the front view of Figure 2 from the pilots' position, highlighting the adjustable rudder pedals and the instrument panel;

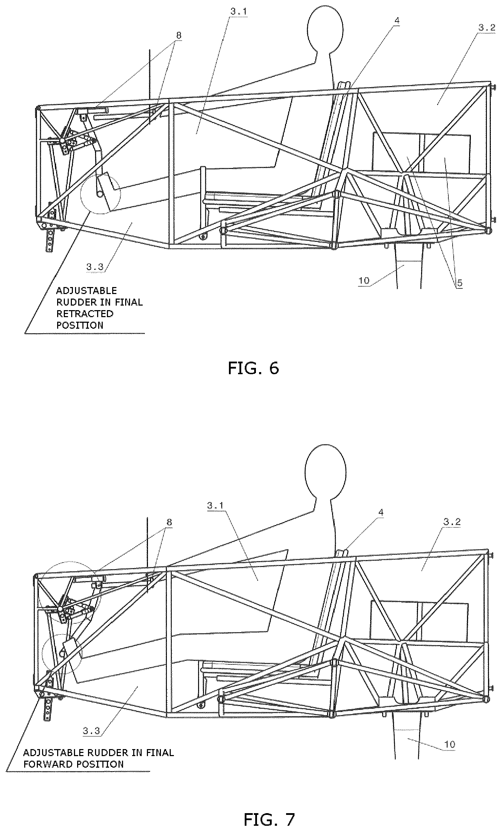

Figure 6 shows a side view of the cockpit structure having the service compartment and batteries accommodated therein, with adjustable rudder pedals adapted to the height of the pilot, in a retracted position;
Figure 7 shows a side view of the cockpit structure of Figure 6, with adjustable rudder pedals adapted to the height of the pilot, in a forward position;

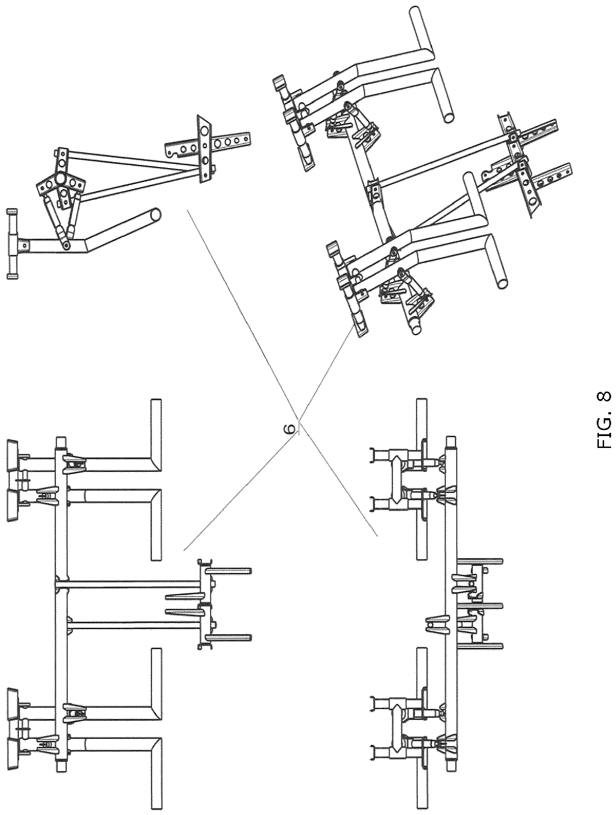

Figure 8 shows orthogonal views and an axonometric view of the adjustable rudder pedals;

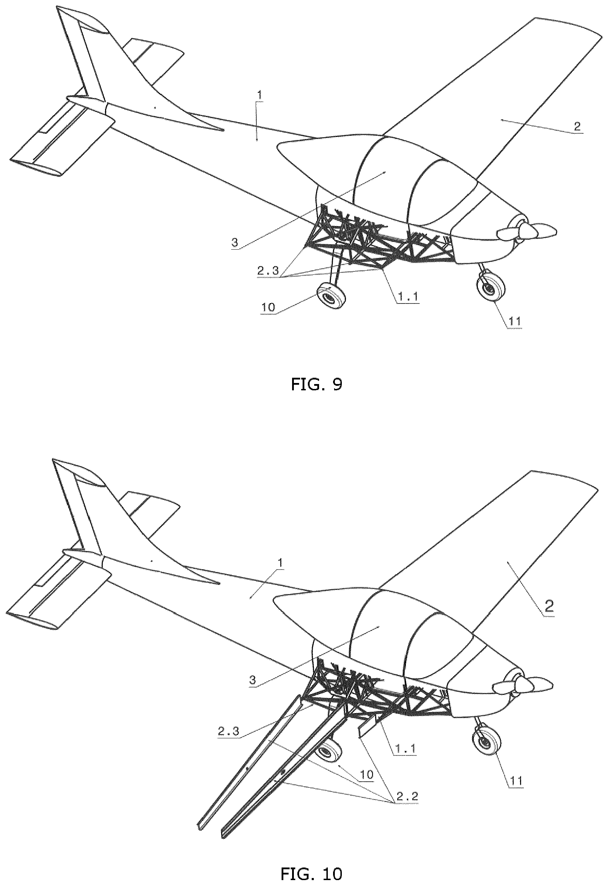

Figure 9 shows an axonometric view of the structure for coupling the wing to the airframe of the aircraft;
Figure 10 shows an axonometric view of the structure for coupling the wing of Figure 9 with the wing connected to the airframe of the aircraft;

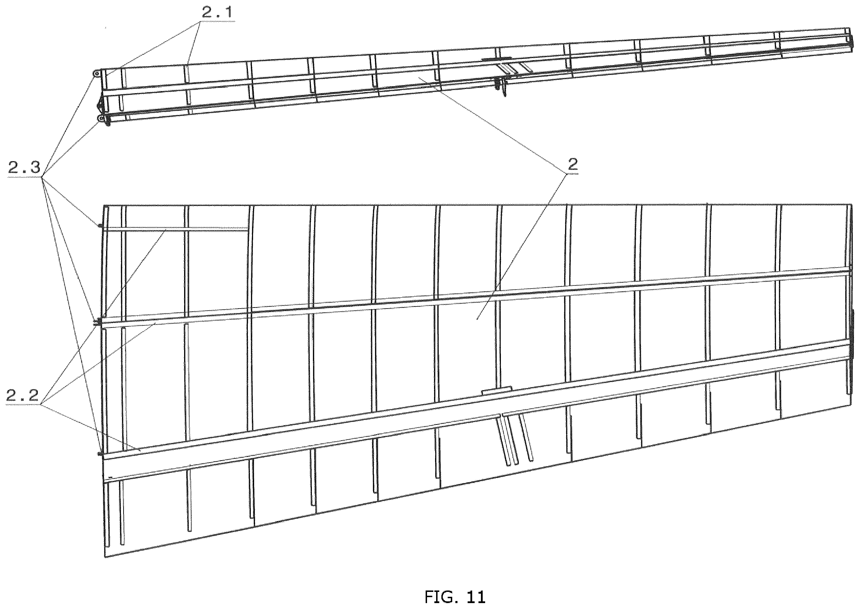

Figure 11 shows front and top views of the structure of the aircraft wing;

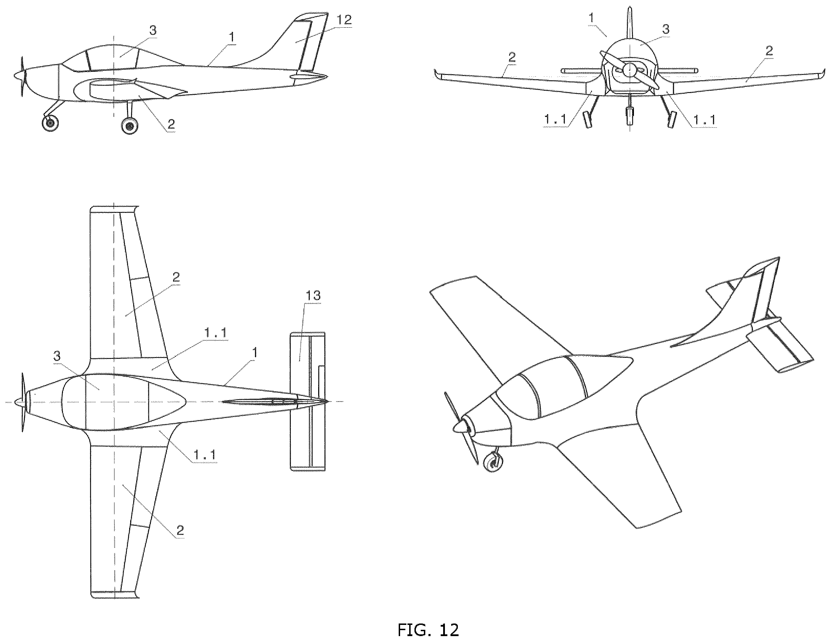

Figure 12 shows some orthogonal views and an axonometric view of the aircraft having the airframe as shown in any of the preferred embodiments of the previous figures.

### Detailed description of a preferred exemplary embodiment

Referring to the aforementioned figures, a description is provided hereinafter of an exemplary embodiment of the airframe for a certified ultralight or light aircraft having:
- a fuselage 1 having a metal truss structure,
- wings 2, having a metal structure with ribs 2.1 and spars 2.2 and
- a cockpit 3, also having a metal truss structure.

The main body of the fuselage 1 is composed of a truss structure consisting of intercommunicating tubes which are pressurized with inert gas to improve structural safety during the flight (in case of failure - e.g. cracks in the material - an instrument of the instrument panel will indicate a pressure loss, allowing the pilot to take actions to land as soon as possible).

The fuselage 1 has critical couplings at its front (for the engine, the landing gear, the rear of the fuselage and the emergency parachute) and at the sides, along the transverse axis B-B of the aircraft, two lateral appendages 1.1 also having a truss structure, and adapted to be connected with the wing couplings 2.3 for the wings 2, which form a single structure with the fuselage and have large connections that minimize interference affecting the overall aerodynamics of the aircraft; for this purpose each wing is connected at three fixation points 7 to reduce specific loads at the couplings.

The interior space of the flight deck 3 of the fuselage 1 is defined by a central compartment 3.1 for housing two seats in side-by-side relationship, which cannot be displaced along the longitudinal axis A-A of the aircraft, a rear service compartment 3.2 having a fixed size and located behind such seats 4, and a front compartment 3.3 for housing adjustable rudder pedals 6.

The rear service compartment extends throughout the width and height of the fuselage and to a depth of more than half a meter and can accommodate batteries 5 for powering an auxiliary electric motor, or alternatively luggage, or a large auxiliary tank of more than 300 liters (for example for agricultural use), or for installation of modern land monitoring equipment.

The central compartment 3.1 of the flight deck 3 is delimited by longitudinal beams having at least two seats 4 jointly connected thereto in side-by-side relationship by suitable means, such as bolts or welds, for at least two crew members of the aircraft to sit thereon.

The rear compartment 3.2 of the cockpit, also delimited by beams, is suitably sized and is equipped with a loading platform for accommodating and supporting the load that said compartment is designed to contain; if the load consists of a battery pack 5 for powering the electric motor said compartment is accessible for installation, inspection and maintenance of each battery.

The adjustable rudder pedals 6 are placed in the front compartment 3.3 of the cockpit of the certified ultralight or light aircraft and are connected to a truss that is welded in the compartment through a torque tube which is in turn connected, by means of rigid rods and connectors, to the flight controls (rudder) and to the handwheel or electric motor 8 for controlling the rudder petals and to the nose gear 11.

The rudder pedals are adjusted by a sliding track system; the position of the rudder pedals may be changed during the flight, in operation, by a handwheel or electric motor system 8.

The center of gravity of the aircraft is kept constant by adapting the distance between the rudder pedals and the pilot without changing the position of the seat 4; for this reason, the beams of the truss structure of the aircraft are specially designed to maintain an optimized weight balance and keep the center of gravity in the same position.

The structure of the wings is characterized by three spars 2.2 connected by appropriate fixation points 7 to the truss appendages 1.1 of the fuselage.

The cockpit structure in the airframe of the certified ultralight or light aircraft of the present invention is formed with the density of its meshes varying according to the corresponding area of the fuselage, with a higher density in the areas under higher stress and a lower density in the others.

The front portion, that houses the propeller and the engine mount, is sized and formed to absorb a greater amount of energy in case of impact to protect the crew from impact effects.

The airframe has strain gages mounted to the fuselage and the wingtips, e.g. strain gage sensors, for monitoring strain in the aircraft such that prompt actions may be taken to mitigate the risk of failure.

The structure is a truss entirely made of metal, which is composed of intercommunicating tubes made of chrome molybdenum steel, and kept at a constant pressure by introducing inert gas or air through a special feed valve; the use of composite materials in this structure is limited to a few parts that are not exposed to critical engagement.

The pressure of the inert gas or air that is being fed into the intercommunicating tubes of the truss is constantly monitored and indicated by suitable pressure sensing means, e.g. a pressure gage, connected to the structure of the fuselage; pressure-sensing data is transmitted to the cockpit through suitable wiring.

The gas-feeding valve and the pressure-sensing gage are placed against the main truss of the cockpit structure.

A hybrid thermal-electric propulsion ultralight aircraft having the above discussed airframe ensures stable flight conditions even when subjected to static and dynamic stresses; the airframe is designed for constant monitoring of the stresses acting thereupon.

The ultralight aircraft equipped with the above-discussed novel airframe may be used in various applications:
- pleasure flight: it ensures safe attitude and can travel over long distances;
- training flight: it is simple to operate;
- agriculture support: the interior space can accommodate an auxiliary tank that may be coupled to auxiliary spray bars and irrigate crops with liquids of various natures.
- reconnaissance flight: the combination of low speed and the interior space that can accommodate cameras and/or sensors of various types allows crews to monitor wide spaces for both civil and military purposes;
- data-collection flight: automation, in addition to an interior space that can accommodate remote detectors, allow acquisition of a variety of data in very short times, while flying over the areas concerned.

The inventive object is susceptible of a number of changes and variants, within the inventive concept disclosed in the appended claims.

The reference numerals that have been used herein will be now explained for clarity:
1 fuselage
   1.1 lateral appendages of the fuselage
2 wing
   2.1 wing rib
   2.2 wing spar
   2.3 wing couplings
3 cockpit having a truss structure
   3.1 central compartment
   3.2 rear compartment
   3.3 front compartment
4 seat
5 battery
6 adjustable rudder pedals
7 fixation points between the lateral appendages 1.1 of the fuselage and the wing spars 2.2
8 handwheel system or electric motor for controlling the rudder pedals
9 instrument panel
10 rear gear
11 nose gear
12 vertical stabilizer
13 horizontal stabilizer

## Claims

1. An airframe for certified ultralight and / or light aircraft with electric-thermal hybrid propulsion comprising a fuselage (1) having a metal truss structure with intercommunicating welded tubes made of chrome-molybdenum steel, wings (2) having a rib (2.1) and spars (2.2) structure and a cockpit (3), wherein the internal space of the cockpit (3) also having a metal truss structure is defined by:
- a central compartment (3.1) for housing at least two seats (4) placed side by side and not displaceable along the longitudinal axis A-A of the aircraft,
- a rear compartment (3.2), of fixed size, positioned behind to said seats (4),
- a front compartment (3.3) for housing an adjustable rudder pedals (6), and said compartments are delimited by longitudinal stringers and vertical and transverse rods, intersecting at nodes,
wherein from the fuselage (1) extend laterally along the transverse axis B-B of the aircraft two lateral appendages (1.1) forming a single structure with the fuselage and being connectable with the ends (2.3) of the wings (2), with said rear compartment (3.2) housing batteries (5) for feeding the auxiliary electric motor, said batteries (5) being housed above a rear gear (10).

2. The airframe as claimed in claim 1 **characterized in that** the rear compartment (3.2) having a fixed size to accommodate the amount of space of the batteries pack (5) supplying power to the electric motor, is provided with a loading platform to support the load.

3. The airframe as claimed in claim 1 **characterized in that** in the central compartment (3.1) at least two seats (4) placed side by side for the sitting of at least two crew members of the aircraft are jointly connected by suitable means to spars.

4. The airframe as claimed in claim 1 and 3 **characterized in that** the adjustment of adjustable rudder pedals (6) keeps constant the center of gravity of the aircraft adjusting the distance between the pedals and the pilot without changing the position of the seat, said adjustment being provided by means of a sliding system on rails and driven through a handwheel system (8) or an electric motor.

5. The airframe as claimed in previous claims **characterized in that** the structure of the wings comprises three spars (2.2) jointly connected at three fixation points (7) to the lateral appendages (1.1) of the fuselage, said lateral appendages (1.1) protruding to form part of the wing.

6. The airframe as claimed in previous claims **characterized in that** the framework structure is made so that the metal mesh that composes it is more dense in the rear gear zone (10) to support the load of battery pack (5).

## Patentansprüche

1. Flugzeugzelle für zertifizierte ultraleichte und/oder leichte Flugzeuge, umfassend einen elektrisch-thermischen Hybridantrieb mit einem Rumpf (1), eine Metallbewehrungsstruktur mit miteinander kommunizierenden geschweißten Rohren aus Chrom-Molybdän-Stahl, Flügel (2) mit einer Rippen-(2,1) und Holmen-Struktur (2.2) und ein Cockpit (3), wobei der Innenraum des Cockpits (3) ist ebenfalls mit einer Metallbewehrungsstruktur definiert, durch :
- eine zentrale Kammer (3.1) zur Aufnahme von zumindest zwei Sitzen (4) die nebeneinander angeordnet sind und sich nicht entlang der Längsachse A-A des Flugzeugs bewegen können,
- eine hintere Kammer (3.2) mit festen Abmessungen, die hinter den besagten Sitzen (4) angeordnet ist,
- eine vordere Kammer (3.3) zur Aufnahme eines verstellbaren Ruderpedals (6),
wobei die besagten Kammern durch Längsholme und vertikale und Querstangen begrenzt sind, die sich an Knotenpunkten schneiden,
wobei sich vom Rumpf (1) seitlich entlang der Querachse B-B des Flugzeugs zwei seitliche Ansätze (1.1) derart erstrecken, dass sie eine einzige Struktur mit dem Rumpf bilden und mit den Enden (2.3) der Flügel (2) verbindbar sind, wobei die besagte hintere Kammer (3.2) Batterien (5) zum Speisen des elektrischen Hilfsmotors aufnimmt, wobei die besagten Batterien (5) oberhalb Hinterräder (10) untergebracht sind.

2. Flugzeugzelle nach Anspruch 1, **dadurch gekennzeichnet, dass** die hintere Kammer (3.2) feste Abmessungen aufweist, um den Platzbedarf des mitgelieferten Batteriepacks (5) auszugleichen, der Energie zu dem Elektromotor liefert, und mit einer vorgesehenen Ladeplattform versehen ist, um die Last zu tragen.

3. Flugzeugzelle nach Anspruch 1, **dadurch gekennzeichnet, dass** in der zentralen Kammer (3.1) mindestens zwei Sitze (4) Seite an Seite für die Aufnahme von mindestens zwei Besatzungsmitgliedern des Flugzeugs durch eine geeignete Einrichtung angeordnet sind, um gemeinsam mit Holmen verbunden zu sein.

4. Flugzeugzelle nach Anspruch 1 und 3, **dadurch gekennzeichnet, dass** die Einstellung der einstellbaren Ruderpedalen (6) den Schwerpunkt des Flugzeugs konstant hält, wobei der Abstand zwischen den Pedalen und dem Piloten eingestellt wird, ohne die Position des Sitzes zu verändern, wobei die besagte Einstellung mittels eines Schiebesystems auf Schienen erfolgt und über ein Handradsystem (8) oder einen elektrischen Motor angetrieben wird.

5. Flugzeugzelle nach den vorhergehenden Ansprüchen, **dadurch gekennzeichnet, dass** die Struktur der Flügel drei Holme (2.2) umfasst, die an drei Befestigungspunkten (7) gemeinsam mit den besagten seitlichen Anhängen (1.1) des Rumpfes verbunden sind, wobei die seitlichen Anhänge (1.1) hervorstehen, um einen Teil des Flügels zu bilden.

6. Flugzeugzelle nach den vorhergehenden Ansprüchen, **dadurch gekennzeichnet, dass** die Bewehrungsstruktur derart hergestellt ist, dass das sie bildende Metallgewebe in dem Hinterradbereich (10) dichter ist, um die Ladung des Batteriepacks (5) zu tragen.

## Revendications

1. Cellule pour des avions ultralégers et/ou légers certifiés à propulsion hybride électrique-thermique comprenant un fuselage (1) ayant une structure en treillis métallique avec des tubes soudés communicants entre eux en acier au chrome-molybdène, des ailes (2) ayant une nervure (2.1) et des longerons (2,2) de la structure et un poste de pilotage (3), dans lequel l'espace interne de la cabine de pilotage (3) qui est également pourvu d'un treillis métallique structure est défini par:
- un compartiment central (3.1) pour loger au moins deux sièges (4) placés côte à côte et non déplaçables le long de l'axe longitudinal A-A de l'avion,
- un compartiment arrière (3.2), de taille fixe, positionné derrière lesdits sièges (4),
- un compartiment avant (3.3) pour loger une pédale de gouvernail réglable (6),
et lesdits compartiments étant délimités par des lisses longitudinales et des tiges verticales et transversales, se coupant aux nœuds,
dans lequel à partir du fuselage (1) s'étendent latéralement le long de l'axe transversal B-B de l'avion deux appendices latéraux (1.1) latéraux formant une structure unique avec le fuselage et pouvant être connectés aux extrémités (2.3) des ailes (2) avec ledit compartiment arrière (3.2), en logeant des batteries (5) pour alimenter le moteur électrique auxiliaire, lesdites batteries (5) étant logées au-dessus dudit train arrière (10) .

2. Cellule selon la revendication 1, **caractérisée en ce que** le compartiment arrière (3.2) ayant une taille fixe pour accueillir la quantité d'espace du bloc de batteries (5) qui alimente le moteur électrique, est pourvu d'une plate-forme de chargement pour supporter la charge.

3. Cellule selon la revendication 1, **caractérisée en ce que** dans le compartiment central (3.1) au moins deux sièges (4) sont placés côte à côte pour accueillir au moins deux membres d'équipage de l'avion et sont reliés ensemble par des moyens appropriés à longerons.

4. Cellule selon les revendications 1 et 3, **caractérisée en ce que** l'ajustement de pédales de gouvernail réglables (6) maintient constant le centre de gravité de l'avion en ajustant la distance entre les pédales et le pilote sans changer la position du siège, ledit réglage étant assuré au moyen d'un système coulissant sur les rails et entraîné par un système de volant (8) ou par un moteur électrique.

5. Cellule selon les revendications précédentes, **caractérisée en ce que** la structure des ailes comprend trois longerons (2.2) reliés conjointement en trois points de fixation (7) aux appendices latéraux (1.1) du fuselage, lesdits appendices latéraux (1.1) faisant saillie pour faire partie de l'aile.

6. Cellule selon les revendications précédentes **caractérisée en ce que** la structure de la cellule est réalisée de manière à ce que la maille métallique qui la compose est plus dense dans la zone du train arrière (10) pour supporter la charge de la batterie (5) .
